# EUROPÄISCHE PATENTSCHRIFT

(11) **EP 4 169 099 B1**
(45) Veröffentlichungstag und Bekanntmachung des Hinweises auf die Patenterteilung: **15.05.2024**
(21) Anmeldenummer: 21798692.6
(22) Anmeldetag: 25.10.2021
(51) Int. Cl.: H01M 8/04223, H01M 8/04225, H01M 8/04302, H01M 8/0438, H01M 8/248, H01M 8/04858, H01M 8/0432

(54) **VERFAHREN FÜR EINEN FROSTSTART EINER BRENNSTOFFZELLENVORRICHTUNG, BRENNSTOFFZELLENVORRICHTUNG SOWIE KRAFTFAHRZEUG MIT EINER BRENNSTOFFZELLENVORRICHTUNG**
PROCESS FOR A FREEZING START OF A FUEL CELL DEVICE, FUEL CELL DEVICE AND VEHICLE COMPRISING THE SAME
PROCÉDÉ DE DÉMARRAGE À FROID D'UN DISPOSITIF DE PILES À COMBUSTIBLE, DISPOSITIF DE PILES À COMBUSTIBLE ET VÉHICULE LE COMPRENANT

(30) Priorität: 28.10.2020 DE 102020128273
(43) Veröffentlichungstag der Anmeldung: 26.04.2023
(73) Patentinhaber: AUDI AG, 85057 Ingolstadt (DE)
(72) Erfinder: KEITSCH, Oliver, 74076 Heilbronn (DE); SIEBEL, Armin, 74172 Neckarsulm (DE); VOIGT, Sebastian, 74074 Heilbronn (DE)
(74) Vertreter: Hentrich Patent- & Rechtsanwaltspartnerschaft mbB
(86) Internationale Anmeldenummer: PCT/EP2021/079466
(87) Internationale Veröffentlichungsnummer: WO 2022/090121

(56) Entgegenhaltungen:
- EP-A1- 2 903 069
- EP-A1- 3 147 986
- DE-A1-102018 210 176

## Beschreibung

Die Erfindung betrifft ein Verfahren für einen Froststart einer Brennstoffzellenvorrichtung mit einem Brennstoffzellenstapel, bei dem eine Mehrzahl von elektrisch in Reihe geschalteter Brennstoffzellen mit einer Kompressionskraft einer Spannvorrichtung zwischen zwei Endplatten verpresst ist, umfassend die Schritte des Feststellens des Vorliegens von Froststartbedingungen, des Verringerns der Kompressionskraft mittels der Spannvorrichtung, des Betreibens der Brennstoffzellen in einem Froststartbetrieb, in welchem die auf die Brennstoffzellen des Brennstoffzellenstapels wirkende und gegenüber derjenigen eines Normalbetriebs verringerte Kompressionskraft beibehalten wird, des kontinuierlichen oder getakteten Erfassens einer Temperatur des Brennstoffzellenstapels (3), sowie des Einstellens der Kompressionskraft mittels der Spannvorrichtung (23) in Abhängigkeit der erfassten Temperatur. Die Erfindung betrifft weiterhin eine Brennstoffzellenvorrichtung sowie ein Kraftfahrzeug mit einer Brennstoffzellenvorrichtung.

Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente die sogenannte Membran-Elektroden-Einheit, die ein Verbund aus einer protonenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den der Membran abgewandten Seiten der Elektroden angeordnet sein. Im Betrieb der Brennstoffzellenvorrichtung mit einer Mehrzahl zu einem Brennstoffzellenstapel zusammengefasster Brennstoffzellen wird der Brennstoff, insbesondere Wasserstoff (H₂) oder ein wasserstoffhaltiges Gasgemisch der Anode zugeführt, wo eine elektrochemische Oxidation von H₂ zu H⁺ unter Abgabe von Elektronen stattfindet. Über die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser. Dieses Wasser muss aus der Brennstoffzelle und dem Brennstoffzellenstapel herausgeführt werden, bis ein Feuchteniveau erreicht ist, das zum Betrieb des Brennstoffzellensystems erforderlich ist.

Brennstoffzellenvorrichtungen benötigen daher ein sorgfältiges Wassermanagement, da es zum Einen erforderlich ist zu verhindern, dass zu viel Wasser sich in der Brennstoffzelle bzw. in dem Brennstoffzellenstapel befindet, was zu einer Blockade der Strömungskanäle für die Versorgung mit den Reaktanten führt. Befindet sich andererseits zu wenig Wasser in der Brennstoffzelle, ist die Protonenleitfähigkeit der Membran begrenzt, sodass auf eine ausreichende Feuchte und Wasserversorgung der Membran geachtet werden muss.

Um für die Vielzahl der in einem Brennstoffzellenstapel zusammengefasster Brennstoffzellen ausreichend Sauerstoff aus der Luft zur Verfügung zu stellen, wird im Kathodenkreislauf zur Versorgung der Kathodenräume des Brennstoffzellenstapels Luft mit dem darin enthaltenen Sauerstoff mittels eines Verdichters verdichtet, so dass relativ warme und trockene komprimierte Luft vorliegt, deren Feuchte für die Verwendung in dem Brennstoffzellenstapel für die Membranelektrodeneinheit nicht ausreicht. Daher wird ein Befeuchter genutzt, der bei zwei gasförmigen Medien mit einem unterschiedlichen Feuchtegehalt eine Übertragung der Feuchte auf das trockenere Medium bewirkt, indem die durch den Verdichter bereitgestellte trockene Luft an einer für Wasserdampf durchlässigen Befeuchtermembran vorbeigeführt wird, deren andere Seite mit der feuchten Abluft aus dem Brennstoffzellenstapel bestrichen wird.

Problematisch ist es, wenn bei einem Start des Brennstoffzellensystems Frostbedingungen vorliegen, also Bedingungen, bei denen Wasser gefriert. Dies kann dazu führen, dass die erforderlichen Strömungskanäle für die Reaktantengase und das Produktwasser durch Eis blockiert sind, weshalb es bekannt ist, eine Trocknungsprozedur beim Abstellen der Brennstoffzellenvorrichtung durchzuführen. Bei einem Start der Brennstoffzellenvorrichtung kann es gleichwohl zu Problemen führen, da bei dem Warmlaufen der Brennstoffzellenvorrichtung bis zum Erreichen von deren Betriebstemperatur Temperaturunterschiede in dem Brennstoffzellenstapel vorliegen und auftreten können, die mit der Zuführung der Medien verbunden sind, also der gasförmigen Reaktanten sowie eines zur Temperierung des Brennstoffzellenstapels genutzten Kühlmediums, das in der Regel durch eine Kühlflüssigkeit mit einer gegenüber den Reaktanten höheren Wärmekapazität gebildet ist.

Es wird in mobilen Anwendungen gezielt darauf geachtet, dass der Start der Brennstoffzellenvorrichtung möglichst schnell durchgeführt werden kann, wobei der Start aber durch die thermischen Massen des Brennstoffzellenstapels und des Kühlmittels, durch etwaige Eisblockaden in Strömungskanälen und durch die maximale Leistungsaufnahme des Fahrzeugs limitiert oder verzögert wird.

In der US 2005 / 058 865 A1 wird ein Brennstoffzellenstapel beschrieben, in dessen die Brennstoffzellen zwischen sich einschließenden Endplatten elektrische Heizelemente integriert sind, sollten Frostbedingungen beim Start vorliegen.

In der DE 10 2016 118 511 A1 wird eine elektrische Kontaktvorrichtung für eine Brennstoffzelle beschrieben, deren Kontaktbereiche dazu genutzt werden können, um als Widerstandheizelement Wärme zu erzeugen.

In der JP 2008-262 822 A wird ein Verfahren zum Stoppen und Starten einer Brennstoffzellenvorrichtung für ein Brennstoffzellenfahrzeug beschrieben. Bei jedem Stopp wird durch eine Kompressionsvorrichtung die Elektrolytmembran in der Stapelrichtung der Membran-Elektrodenanordnung durch eine Erhöhung des Druckes komprimiert, wobei dieser komprimierte Zustand für die gesamte Dauer bis zu einem neuen Start beibehalten wird. Die Kompression der Elektrolytmembran verhindert, dass diese Wasser aufnehmen kann, so dass die Wasseraufnahmekapazität für den Fall eines Froststartes wieder bereit gestellt wird, da bei jedem neuen Start die Kompression des Elektrolytmembran beendet wird durch eine Druckreduzierung, bis der erhöhte Druck den Wert Null erreicht, also vollständig und exakt die beim Stopp erfolgende Druckerhöhung rückgängig gemacht wird.

In der KR 2013 0 017 960 A wird eine Presseinheit dazu genutzt, um an den randseitige Brennstoffzellen eines Brennstoffzellenstapels den elektrischen Widerstand aufgrund der Reduzierung der auf diese wirkenden Kompressionskraft zu erhöhen, damit diese unter einem verschlechterten Wirkungsgrad betrieben und aufgeheizt werden.

In der EP 3 147 986 A1 wird durch eine Reduktion der Verspannung eines Brennstoffzellenstapels ein Anstieg des Kontaktwiderstandes erreicht.

In der EP 2 903 069 A1 werden Brennstoffzellen beschrieben, die im Froststartbetrieb sauerstoffverarmt und mit einer gegenüber derjenigen des Normalbetriebs erhöhten Spannung betrieben werden.

In der DE 10 2018 210176 A1 werden elektrische Aktuatoren zur Einstellung der Spannung einer Spannvorrichtung bei einem Brennstoffzellenstapel verwendet.

Es ist die Aufgabe der vorliegenden Erfindung, ein Verfahren anzugeben, mit dem ein gleichmäßigeres Erwärmen über den gesamten Brennstoffzellenstapel realisierbar ist. Aufgabe ist weiterhin, eine verbesserte Brennstoffzellenvorrichtung sowie ein verbessertes Kraftfahrzeug bereit zu stellen.

Diese Aufgabe wird durch ein Verfahren mit den Merkmalen des Anspruchs 1, durch eine Brennstoffzellenvorrichtung mit den Merkmalen des Anspruchs 8 und durch ein Kraftfahrzeug mit den Merkmalen des Anspruchs 9 gelöst. Vorteilhafte Ausgestaltungen mit zweckmäßigen Weiterbildungen der Erfindung sind in den abhängigen Ansprüchen angegeben.

Das eingangs geschilderte Verfahren, zeichnet sich dadurch aus, dass im Froststartbetrieb jeder einzelne Kontaktwiderstand (Ohm'scher Widerstand) zwischen den Brennstoffzellen des Brennstoffzellenstapels erhöht wird, aufgrund der Verringerung der Kompressionskraft durch die Spannvorrichtung.

In diesem Zuge ist es im Sinne der Erfindung, wenn eine Temperatur des Brennstoffzellenstapels kontinuierlich oder getaktet erfasst wird, und wenn die Kompressionskraft mittels der Spannvorrichtung in Abhängigkeit der erfassten Temperatur eingestellt wird. Die Spannvorrichtung kann also die Kompressionskraft aktiv steuern und/oder regeln in Abhängigkeit der Temperatur des Brennstoffzellenstapels bzw. in Abhängigkeit der Umgebungstemperatur.

Im Froststartbetrieb wird vorzugsweise die Kompressionskraft von der Spannvorrichtung solange kontinuierlich oder stufenweise erhöht wird, bis eine vorgegebene Normaltemperatur des Brennstoffzellenstapels erreicht ist. Durch die Erhöhung der Kompressionskraft sinkt wieder der Ohm'sche Widerstand über den gesamten Brennstoffzellenstapel hinweg.

Die Brennstoffzellenvorrichtung kann beim Erreichen der Normaltemperatur in den Normalbetrieb überführt werden, in welchem dann eine gegenüber derjenigen des Froststartbetriebs erhöhte Kompressionskraft auf die Brennstoffzellen ausgeübt wird. Somit wird im Normalbetrieb durch die wieder erhöhte Kompressionskraft gewährleistet, dass die nötige elektrische Leitfähigkeit zwischen den Einheitszellen des Brennstoffzellenstapel vorherrscht.

Es besteht für ein zusätzliches Erwärmen des Stapels die Möglichkeit, dass die Brennstoffzellen im Froststartstartbetrieb außerdem sauerstoffverarmt betrieben werden.

Es besteht für ein zusätzliches Erwärmen des Stapels die Möglichkeit, dass die Brennstoffzellen im Froststartbetrieb außerdem mit einer gegenüber derjenigen des Normalbetriebs erniedrigten Spannung betrieben werden. Hierzu kommt eine erniedrigte Spannung von weniger als 0,4 Volt je Einheitszelle in Betracht.

Eine effiziente Verspannung/Verpressung der Einheitszellen sowie ein verbessertes Einstellen der wirkenden Kompressionskraft lässt sich beispielsweise dadurch hervorrufen, dass die Kompressionskraft auf die Zellreihe in Abhängigkeit des Drucks in einem Luftbalg eingestellt wird.

Eine effiziente Verspannung/Verpressung der Einheitszellen sowie ein verbessertes Einstellen der wirkenden Kompressionskraft lässt sich alternativ beispielsweise dadurch hervorrufen, dass die Spannvorrichtung mit Spannbändern gebildet ist, deren Spannung mit einem elektrischen Aktuator eingestellt wird.

Eine effiziente Verspannung/Verpressung der Einheitszellen sowie ein verbessertes Einstellen der wirkenden Kompressionskraft lässt sich alternativ beispielsweise dadurch hervorrufen, dass die Spannvorrichtung mit Zugstangen gebildet ist, deren Spannung mit einem elektrischen Aktuator eingestellt wird.

Die genannten Wirkungen und Vorteile gelten sinngemäß auch bei einer Brennstoffzellenvorrichtung mit einer verstellbaren Spannvorrichtung zur Einstellung der Kompressionskraft auf die zwischen die zwei Endplatten gestapelten Brennstoffzellen, die mit einem Steuergerät gebildet ist, das eingerichtet ist zur Durchführung eines der vorstehend genannten Verfahren sowie für ein Kraftfahrzeug mit einer derartigen Brennstoffzellenvorrichtung.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung einer Brennstoffzellenvorrichtung, und
- Fig. 2: ein Diagramm, in welchem gestrichelt die Spannungs-Strom-Kennlinie eines regulären Betriebs (Normalbetrieb) der Brennstoffzellenvorrichtung dargestellt ist, und in welchem durchgezogen die Spannungs-Strom-Kennlinie eines Froststrartbetriebs der Brennstoffzellenvorrichtung mit verringerter Kompressionskraft auf die Einheitszellen dargestellt ist.

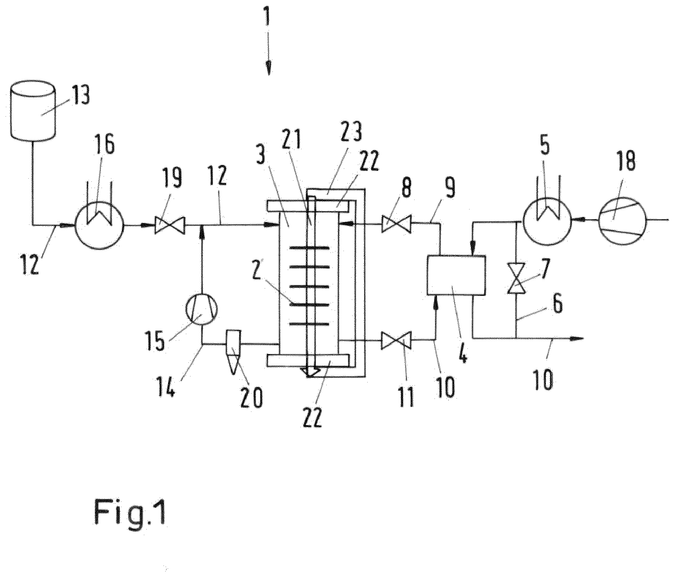

In der Figur 1 ist schematisch eine Brennstoffzellenvorrichtung 1 gezeigt, wobei diese eine Mehrzahl von in einem Brennstoffzellenstapel 3 zusammengefasster Brennstoffzellen 2 umfasst.

Jede der Brennstoffzellen 2 umfasst eine Anode, eine Kathode sowie eine die Anode von der Kathode trennende, protonenleitfähige Membran. Die Membran ist aus einem lonomer, vorzugsweise einem sulfonierten Polytetrafluorethylen-Polymer (PTFE) oder einem Polymer der perfluorierten Sulfonsäure (PFSA) gebildet. Alternativ kann die Membran auch als eine sulfonierte Hydrocarbon-Membran gebildet sein.

Den Anoden und/oder den Kathoden kann zusätzlich ein Katalysator beigemischt sein, wobei die Membranen vorzugsweise auf ihrer ersten Seite und/oder auf ihrer zweiten Seite mit einer Katalysatorschicht aus einem Edelmetall oder einem Gemisch umfassend Edelmetalle wie Platin, Palladium, Ruthenium oder dergleichen beschichtet sind, die als Reaktionsbeschleuniger bei der Reaktion der jeweiligen Brennstoffzelle 2 dienen.

Über einen Anodenraum kann der Anode Brennstoff (zum Beispiel Wasserstoff) aus einem Brennstofftank 13 zugeführt werden. In einer Polymerelektrolytmembranbrennstoffzelle (PEM-Brennstoffzelle) werden an der Anode Brennstoff oder Brennstoffmoleküle in Protonen und Elektronen aufgespaltet. Die PEM lässt die Protonen hindurch, ist aber undurchlässig für die Elektronen. An der Anode erfolgt beispielsweise die Reaktion: 2H₂ → 4H⁺ + 4e⁻ (Oxidation/Elektronenabgabe). Während die Protonen durch die PEM zur Kathode hindurchtreten, werden die Elektronen über einen externen Stromkreis an die Kathode oder an einen Energiespeicher geleitet.

Über einen Kathodenraum kann der Kathode das Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻→ 2H₂O (Reduktion/Elektronenaufnahme).

In dem Brennstoffzellenstapel 3 sind mehrere Brennstoffzellen 2 zu einer Zellreihe zwischen zwei Endplatten 22 zusammengefasst, die von einer Spannvorrichtung 23 mit einer Kompressionskraft beaufschlagt werden, um die nötige Dichtigkeit und den für die elektrische Leitfähigkeit des Stapels benötigten Kontaktdruck zu gewährleisten. Aufgrund der Vielzahl der Brennstoffzellen 2 muss eine ausreichend große Menge an Kathodengas zur Verfügung gestellt werden, so dass durch einen Verdichter 18 ein großer Kathodengasmassenstrom oder Frischgasstrom bereitgestellt wird, wobei infolge der Komprimierung des Kathodengases sich dessen Temperatur stark erhöht. Die Konditionierung des Kathodengases oder des Frischluftgasstroms, also dessen Einstellung hinsichtlich der im Brennstoffzellenstapel 3 gewünschten Temperatur und Feuchte, erfolgt in einem dem Verdichter 18 nachgelagerten Ladeluftkühler 5 und einem diesem nachgelagerten Befeuchter 4, der eine Feuchtesättigung der Membranen der Brennstoffzellen 2 zur Steigerung von deren Effizienz bewirkt, da dies den Protonentransport begünstigt. Um die in einem Normalbetrieb der Brennstoffzellen 2 erzeugte Wärme abtransportieren zu können, wird der Brennstoffzellenstapel 3 von einer Kühlmittelleitung durchlaufen, die einen Bestandteil eines nicht nähre gezeigten Kühlmittelkreislaufs bildet.

Die Kompressionskraft auf die Zellreihe lässt sich mittels der Spannvorrichtung 23 einstellen, deren Spannmittel, z.B. Zugsstangen, Spannbänder oder dergleichen, beispielsweise mit einem elektrisch angetriebenen - ebenfalls nicht näher gezeigten - Aktuator verstellbar sind. Aufgrund dieser Einstellmöglichkeit der Kompressionskraft, kann die Brennstoffzellenvorrichtung 1 zwischen einem Froststartbetrieb und einem Normalbetrieb umgeschaltet werden.

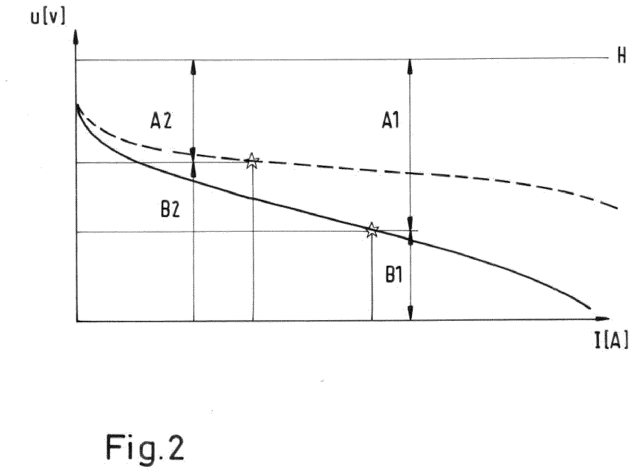

Das Verfahren für den Froststart ist anhand des Diagramms von Figur 2 näher nachzuvollziehen. Die U/I-Kennlinie des Froststartbetriebs mit verringerter Kompressionskraft auf die Zellreihe ist dabei gegenüber der U/I-Kennlinie des Normalbetriebs mit regulärer Kompressionskraft auf die Zellreihe abgesenkt. Dargestellt sind darin auch der Anteil A1 der Abwärme im Froststartbetrieb, der Anteil B1 der elektrischen Leistung im Froststartbetrieb, der Anteil A2 der Abwärme im Normalbetrieb, der Anteil B2 der elektrischen Leistung im Normalbetrieb und der Heizwert H des Brennstoffs (H₂).

Das Verfahren umfasst dabei die Schritte des Feststellens des Vorliegens von Froststartbedingungen, des Verringerns der Kompressionskraft mittels der Spannvorrichtung 23, des Betreibens der Brennstoffzellen 2 in dem Froststartbetrieb, in welchem die auf die Brennstoffzellen 2 des Brennstoffzellenstapels 3 wirkende und gegenüber derjenigen eines Normalbetriebs verringerte Kompressionskraft beibehalten wird, des kontinuierlichen oder getakteten Erfassens einer Temperatur des Brennstoffzellenstapels (3), sowie des Einstellens der Kompressions-kraft mittels der Spannvorrichtung (23) in Abhängigkeit der erfassten Temperatur.

Erfindungsgemäß wird mittels eines Temperatursensors eine Temperatur des Brennstoffzellenstapels 3 kontinuierlich oder getaktet erfasst, wobei die Kompressionskraft mittels der Spannvorrichtung 23 in Abhängigkeit der erfassten Temperatur eingestellt wird. Die Kompressionskraft von der Spannvorrichtung 23 wird dann solange kontinuierlich oder stufenweise erhöht, bis eine vorgegebene Normaltemperatur des Brennstoffzellenstapels 3 erreicht ist. Beim Erreichen der Normaltemperatur wird die Brennstoffzellenvorrichtung 1 in den Normalbetrieb überführt, in welchem eine gegenüber derjenigen des Froststartbetriebs erhöhte Kompressionskraft auf die Brennstoffzellen 2 ausgeübt wird, damit eine ausreichende Kontaktierung der Einheitszellen erzielt wird.

Es ist die zusätzliche Möglichkeit gegeben, dass die Brennstoffzellen 2 im Froststartstartbetrieb außerdem sauerstoffverarmt betrieben werden. Außerdem ist es möglich, dass die Brennstoffzellen 2 im Froststartbetrieb mit einer gegenüber derjenigen des Normalbetriebs erhöhten Spannung betrieben werden.

Bei einer Brennstoffzellenvorrichtung 1 mit einem Steuergerät, das eingerichtet ist zur Durchführung eines Verfahrens, können die vorstehend genannten Vorteile für einen Froststart genutzt und eine Degradation des Brennstoffzellenstapels 3 vermieden oder zumindest gemildert werden. Dies gilt insbesondere, wenn die Brennstoffzellenvorrichtung 1 in einem Kraftfahrzeug angeordnet ist.

Mit dem Verfahren lässt sich die Effizienz des Antriebssystems des Kraftfahrzeugs verbessern, weil dadurch die relativen Kraftstoffkosten sinken, die Ökobilanz verbessert wird und die Reichweite steigt. Diese weitere Steigerung der Effizienz in den Brennstoffzellen 2 wird den ohnehin herausfordernden Froststart in Zukunft noch weiter erschweren, da die Heizleistung weiter absinkt. Die Erfindung wirkt diesem Effekt entgegen, indem sie die Effizienz der Brennstoffzellen 2 temporär reduziert und so bei gleicher elektrischer Leistung die Abwärme zum Heizen des Brennstoffzellenstapels 3 erhöht. Dadurch vergrößert sich der Spielraum bei der Auslegung der Froststartprozedur und der Brennstoffzellenstapel 3 kann schneller aufgeheizt werden. Das bedeutet für den Nutzer, dass das Fahrzeug schneller fahrbereit ist.

### BEZUGSZEICHENLISTE:

- 1: Brennstoffzellenvorrichtung
- 2: Brennstoffzelle
- 3: Brennstoffzellenstapel
- 4: Befeuchter
- 5: Ladeluftkühler
- 6: Bypassleitung
- 7: Befeuchter-Bypassventil
- 8: Frischluftdosierventil
- 9: Kathodenfrischgas
- 10: Kathodenabgasleitung
- 11: Kathodenabgasventil
- 12: Brennstoffleitung
- 13: Brennstofftank
- 14: Rezirkulationsleitung
- 15: Rezirkulationsgebläse
- 16: Wärmetauscher
- 18: Verdichter
- 19: Brennstoffdosierventil
- 20: Wasserabscheider
- 21: Kühlmittelleitung
- 22: Endplatte
- 23: Spannvorrichtung
- A1: Anteil Abwärme (Froststartbetrieb)
- B1: Anteil elektrische Leistung (Froststartbetrieb)
- A2: Anteil Abwärme (Normalbetrieb)
- B2: Anteil elektrische Leistung (Normalbetrieb)
- H: Heizwert (Brennstoff / H₂)

## Patentansprüche

1. Verfahren für einen Froststart einer Brennstoffzellenvorrichtung (1) mit einem Brennstoffzellenstapel (3), bei dem eine Mehrzahl von elektrisch in Reihe geschalteter Brennstoffzellen (2) mit einer Kompressionskraft einer Spannvorrichtung (23) zwischen zwei Endplatten (22) verpresst ist, umfassend die Schritte des Feststellens des Vorliegens von Froststartbedingungen, des Verringerns der Kompressionskraft mittels der Spannvorrichtung (23), des Betreibens der Brennstoffzellen (2) in einem Froststartbetrieb, in welchem die auf die Brennstoffzellen (2) des Brennstoffzellenstapels (3) wirkende und gegenüber derjenigen eines Normalbetriebs verringerte Kompressionskraft beibehalten wird, des kontinuierlichen oder getakteten Erfassens einer Temperatur des Brennstoffzellenstapels (3), sowie des Einstellens der Kompressionskraft mittels der Spannvorrichtung (23) in Abhängigkeit der erfassten Temperatur.

2. Verfahren nach Anspruch 1, **dadurch gekennzeichnet, dass** die Kompressionskraft von der Spannvorrichtung (23) solange kontinuierlich oder stufenweise erhöht wird, bis eine vorgegebene Normaltemperatur des Brennstoffzellenstapels (3) erreicht ist.

3. Verfahren nach Anspruch 2, **dadurch gekennzeichnet, dass** die Brennstoffzellenvorrichtung (1) beim Erreichen der Normaltemperatur in den Normalbetrieb überführt wird, in welchem eine gegenüber derjenigen des Froststartbetriebs erhöhte Kompressionskraft auf die Brennstoffzellen (2) ausgeübt wird.

4. Verfahren nach einem der Ansprüche 1 bis 3, **dadurch gekennzeichnet, dass** die Brennstoffzellen (2) im Froststartstartbetrieb außerdem sauerstoffverarmt betrieben werden.

5. Verfahren nach einem der Ansprüche 1 bis 4, **dadurch gekennzeichnet, dass** die Brennstoffzellen (2) im Froststartbetrieb außerdem mit einer gegenüber derjenigen des Normalbetriebs erniedrigten Spannung betrieben werden.

6. Verfahren nach einem der Ansprüche 1 bis 5, **dadurch gekennzeichnet, dass** die Spannvorrichtung (23) mit Spannbänder gebildet ist, deren Spannung mit einem elektrischen Aktuator eingestellt wird.

7. Verfahren nach einem der Ansprüche 1 bis 5, **dadurch gekennzeichnet, dass** die Spannvorrichtung (23) mit Zugstangen gebildet ist, deren Spannung mit einem elektrischen Aktuator eingestellt wird.

8. Brennstoffzellenvorrichtung (1) mit einer verstellbaren Spannvorrichtung (23) zur Einstellung der Kompressionskraft auf zwischen zwei Endplatten (22) gestapelte Brennstoffzellen (2), sowie mit einem Steuergerät, das eingerichtet ist zur Durchführung eines Verfahrens nach einem der Ansprüche 1 bis 7.

9. Kraftfahrzeug mit einer Brennstoffzellenvorrichtung (1) nach Anspruch 8.

## Claims

1. A method for a freeze start of a fuel cell device (1) with a fuel cell stack (3), in which a plurality of electrically in series connected fuel cells (2) are compressed between two end plates (22) with a compressive force of a tensioning device (23), comprising the steps of determining the presence of freeze start conditions, reducing the compressive force by means of the tensioning device (23), operating the fuel cells (2) in a frost start mode, in which the compression force acting on the fuel cells (2) of the fuel cell stack (3) is maintained reduced compared with that of a normal operation, continuously or intermittently detecting a temperature of the fuel cell stack (3), and adjusting the compression force by means of the tensioning device (23) as a function of the detected temperature.

2. The method according to claim 1, **characterized in that** the compression force of the tensioning device (23) is increased continuously or in steps until a predetermined normal temperature of the fuel cell stack (3) is reached.

3. The method according to claim 2, **characterized in that** the fuel cell device (1) is transferred to normal operation when the normal temperature is reached, in which an increased compression force is exerted on the fuel cells (2) compared to that of the frost start mode.

4. The method according to any one of claims 1 to 3, **characterized in that** the fuel cells (2) are also operated in oxygen-depleted mode in frost start mode.

5. The method according to any one of claims 1 to 4, **characterized in that** the fuel cells (2) are also operated in frost start mode at a voltage which is lower than that of normal operation.

6. The method according to any one of claims 1 to 5, **characterized in that** the tensioning device (23) is formed with tensioning straps whose tension is adjusted with an electric actuator.

7. The method according to any one of claims 1 to 5, **characterized in that** the tensioning device (23) is formed with tie rods, the tension of which is adjusted by means of an electric actuator.

8. A fuel cell device (1) with an adjustable tensioning device (23) for adjusting the compression force on fuel cells (2) stacked between two end plates (22), and with a control device which is configured to carry out a method according to any one of claims 1 to 7.

9. A motor vehicle with a fuel cell device (1) according to claim 8.

## Revendications

1. Procédé pour un démarrage en cas de gel d'un dispositif de pile à combustible (1) avec un empilement de piles à combustible (3), pour lequel une pluralité de piles à combustible (2) montées électriquement en série est pressée avec une force de compression d'un dispositif de serrage (23) entre deux plaques d'extrémité (22), comprenant les étapes de constatation de la présence de conditions de démarrage en cas de gel, de la diminution de la force de compression au moyen du dispositif de serrage (23), du fonctionnement des piles à combustible (2) dans un mode de démarrage en cas de gel, dans lequel la force de compression diminuée par rapport à celle d'un mode normal et agissant sur les piles à combustible (2) de l'empilement de piles à combustible (3) est conservée, de la détection continue ou cadencée d'une température de l'empilement de piles à combustible (3), ainsi que du réglage de la force de compression au moyen du dispositif de serrage (23) en fonction de la température détectée.

2. Procédé selon la revendication 1, **caractérisé en ce que** la force de compression est augmentée en continu ou progressivement par le dispositif de serrage (23) jusqu'à ce qu'une température normale prédéfinie de l'empilement de piles à combustible (3) soit atteinte.

3. Procédé selon la revendication 2, **caractérisé en ce que** le dispositif de pile à combustible (1) passe au mode normal lorsque la température normale est atteinte, mode dans lequel une force de compression augmentée par rapport à celle du mode de démarrage en cas de gel est exercée sur les piles à combustible.

4. Procédé selon l'une quelconque des revendications 1 à 3, **caractérisé en ce que** les piles à combustible (2) fonctionnent en outre en étant appauvries en oxygène dans le mode de démarrage en cas de gel.

5. Procédé selon l'une quelconque des revendications 1 à 4, **caractérisé en ce que** les piles à combustible (2) fonctionnent en outre avec une tension diminuée par rapport à celle du mode normal dans le mode de démarrage en cas de gel.

6. Procédé selon l'une quelconque des revendications 1 à 5, **caractérisé en ce que** le dispositif de serrage (23) est formé avec des bandes de serrage, dont la tension est réglée avec un actionneur électrique.

7. Procédé selon l'une quelconque des revendications 1 à 5, **caractérisé en ce que** le dispositif de serrage (23) est formé avec des tiges de traction, dont la tension est réglée avec un actionneur électrique.

8. Dispositif de pile à combustible (1) avec un dispositif de serrage (23) réglable pour le réglage de la force de compression sur des piles à combustible (2) empilées entre deux plaques d'extrémité, ainsi qu'avec un appareil de commande qui est configuré afin de mettre en oeuvre un procédé selon l'une quelconque des revendications 1 à 7.

9. Véhicule automobile avec un dispositif de pile à combustible (1) selon la revendication 8.
